# EUROPEAN PATENT SPECIFICATION

(11) **EP 1 628 042 B1**
(45) Date of publication and mention of the grant of the patent: **17.07.2013**
(21) Application number: 05016992.9
(22) Date of filing: 04.08.2005
(51) Int. Cl.: F16F 15/26

(54) **Engine with balancing shaft**
Motor mit Ausgleichswelle
Moteur avec arbre d'équilibrage

(30) Priority: 17.08.2004 JP 2004237336
(43) Date of publication of application: 22.02.2006
(73) Proprietor: Yamaha Hatsudoki Kabushiki Kaisha, Iwata-shi, Shizuoka-ken (JP)
(72) Inventor: Nakayama, Yoshiharu, Iwata-shi Shizuoka-ken (JP)
(74) Representative: Grünecker, Kinkeldey, Stockmair & Schwanhäusser

(56) References cited:
- EP-A- 1 081 410
- EP-A2- 1 136 721
- WO-A-2005/093286
- DE-A1- 3 314 801
- DE-A1- 3 705 346
- GB-A- 844 071
- US-A- 4 028 963
- US-A- 5 253 547
- US-A1- 2003 013 534
- US-A1- 2003 037 752
- PATENT ABSTRACTS OF JAPAN vol. 016, no. 191 (M-1245), 8 May 1992 (1992-05-08) & JP 04 025642 A (HONDA MOTOR CO LTD), 29 January 1992 (1992-01-29)

## Description

The present invention relates to an engine according to the preamble portion of claim 1, and In particular to an engine having a balancer shaft disposed in parallel with a crankshaft.

Installation of a balancer device having a balancer shaft and balancer weights is known to suppress vibration due to the reciprocating motion of pistons and connecting rods. One example of such a balancer device proposed includes a balancer shaft journaled at its both ends through bearings by a crankcase and disposed in parallel with a crankshaft, and balancer weights mounted on the balancer shaft on axially outer sides relative to the bearings (see JP-A-2003-56847).

In the conventional balancer device described above, however, since the balancer weights are mounted at outer ends of the balancer shaft which project outside the bearings In a cantilever manner, a relatively large bending moment acts on bearing portions of the balancer shaft due to the weight of the balancer weights. Therefore, the balancer shaft needs to have a diameter enough to endure the bending moment, which means that the balancer shaft Is accordingly large in diameter In addition, since the bearings receive an offset load due to the balancer weights located on axially outer sides relative thereto, the service life of the bearings is accordingly short.

US 2003/013534 A1 according to the preamble of claim 1 discloses a balance shaft for an engine, which is held in position by first and second bearing journals. Said balance shaft includes a first counter-weight being an inner counter-weight and a second counter-weight being an outer counter-weight, said inner and outer counterweights sandwiching the first bearing journal. A third counter-weight is provided located adjacent to the second bearing journal.

US 2003/037752 A1 discloses a balancer shaft supported by a ball bearing and a needle bearing, wherein the bearings are provided on opposite sides of the balancer shaft. At the respective ends of the balancer shaft, balance weights are provided in order to reduce a vibration of a crankshaft. At the crankshaft, a driving gear is connected meshing a driven gear of the balancer shaft.

EP 1 136 721 A2 discloses an engine comprising a balancer device having a balancer shaft rotatably supported in a crankcase. Balancer weights are provided at end portions of the balancer shaft. One of the weights is divided in first and second weights being disposed on opposite sides of a bearing supporting an end portion of the balancer shaft.

GB 844 071 A discloses a balancer shaft having counterweights at opposite ends thereof disposed. A rotation is transmitted from a crankshaft to the balancer shaft by means of toothed wheels. One of the counterweights is directly connected to the toothed wheel of the balancer shaft.

An object of the present invention is to provide an engine as indicated above In which the bending moment which acts on bearing portions of a balancer shaft and an offset load which acts on bearings can be reduced, and in which upsizing of the diameter of the balancer shaft can be avoided and the service life of the bearings can be extended.

This object is solved by the features of claim 1.

Further improvements are laid down in the subclaims.

In the following, the present invention is explained in greater detail with respect to several embodiments thereof in conjunction with the accompanying drawings, wherein:
- FIG. 1: is a sectional side view of an engine according to an embodiment;
- FIG. 2: is a partially sectional plan view showing the positional relationship between a crankshaft and a balancer shaft of the engine; and
- FIG. 3: is a partially sectional side view showing the positional relationship between the crankshaft and the balancer shaft of the engine.

An embodiment will be described below with reference to the accompanying drawings.

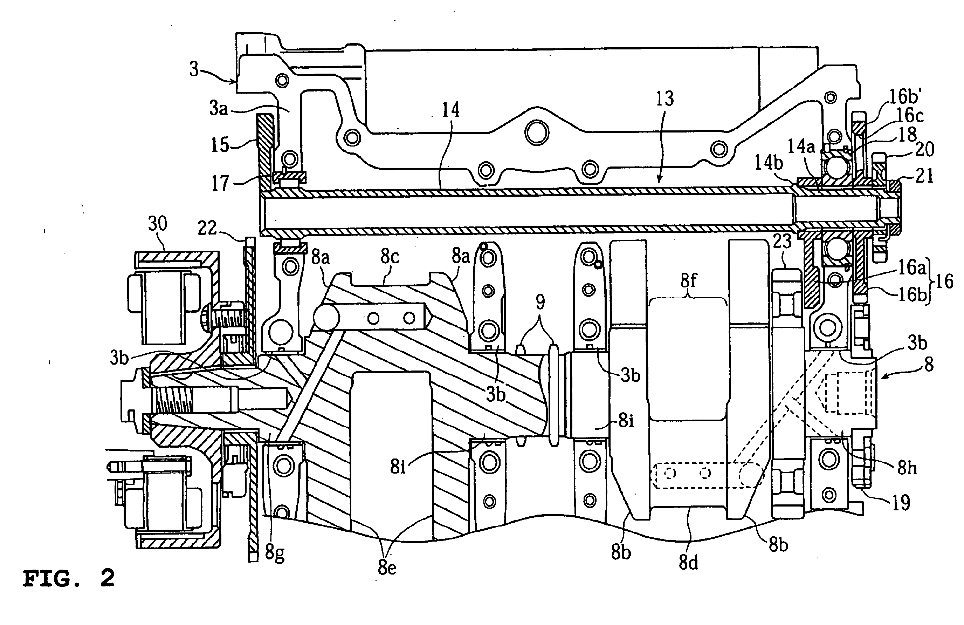

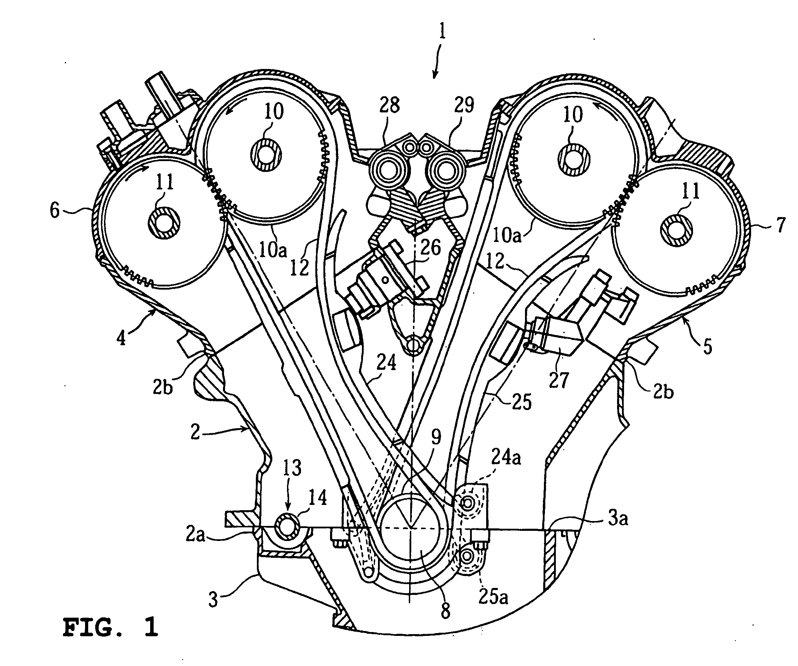

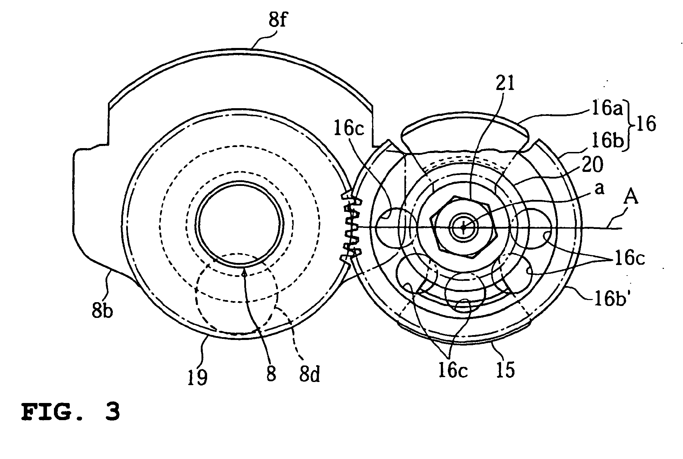

FIGs. 1 through 3 illustrate an engine according to an embodiment, in which: FIG. 1 is a sectional side view of the entire engine; and FIGs. 2 and 3 are a plan view and a side view, respectively, of a balancer device.

In the drawings, reference numeral 1 denotes a water-cooled, four-stroke, V-type, four-cylinder engine, which has the following constitution. A cylinder block 2 is formed with cylinder bores disposed to configure a V-bank. A crankcase 3 is coupled to a lower mating face 2a of the cylinder block 2, a front and a rear cylinder head 4, 5 are coupled to a front and a rear upper mating face 2b, 2b thereof, and head covers 6, 7 are mounted on top of the front and the rear cylinder head 4, 5, respectively.

Although not shown in the drawings, each piston inserted in each cylinder bore is coupled to a crankshaft 8 via a connecting rod. The crankshaft 8 has left and right crank arms 8a, 8b; a left and a right crank pin 8c, 8d formed integrally with the crank arms 8a, 8b and eccentrically with respect to the axis of the crankshaft to couple the left crank arms 8a, 8a with each other or couple the right crank arms 8b, 8b with each other; and left and right crank weights 8e, 8f formed integrally with the left and right crank arms 8a, 8b as projected on the opposite side of the crank pins 8c, 8d. The left and the right crank pin 8c, 8d are coupled to the connecting rods of the front and rear cylinders, respectively.

Outer journal portions 8g, 8h formed on axially outer sides relative to the left and right crank arms 8a, 8b, and inner journal portions 8i, 8i formed between the left and right crank arms 8a, 8b, of the crankshaft 8, are journaled by a journal bearing. The journal bearing is constructed with a block side journal bearing portion formed in the cylinder block 2 on the lower mating face 2a side, and a case side journal bearing portion 3b formed in the crankcase 3 on the upper mating face 3a side, and functions as a bearing when the crankcase 3 and the cylinder block 2 are coupled to each other. Reference numeral 30 denotes an alternator mounted on the crankshaft 8 at its portion projecting out of the crankcase.

An axially central portion of the crankshaft 8 is formed integrally with crank sprockets 9, 9 for driving camshafts. An intake camshaft 10 and an exhaust camshaft 11 are disposed on the upper mating face of each cylinder head 4 such that they are parallel with each other and the intake camshaft 10 is located internally of the V-bank. An axially central portion of each intake camshaft 10 is formed with a cam sprocket 10a, which is connected to the crank sprocket 9 through a timing chain 12.

Reference numerals 24, 25 denote tensioner members for tension adjustment of the respective timing chains 12, 12. Lower ends 24a, 25a of the tensioner members 24, 25 are pivotally supported on the lower mating face 2a of the cylinder block 2, and their upper portions are urged by urging members 26, 27, respectively, in directions of application of tension to the timing chains 12.

Reference numerals 28, 29 denote hydraulic switching valves for switching operations of a variable valve timing mechanism (not shown). The two switching valves 28, 29 are disposed in the V-bank, with their axes in parallel with the crankshaft axis.

The engine 1 of this embodiment includes a balancer device 13. The balancer device 13 includes a balancer shaft 14 disposed in parallel with the crankshaft 8, a left balancer weight 15 disposed at the left end of the balancer shaft 14, and a right balancer weight 16 disposed at the right end thereof. FIG. 2 shows the mating face 3a of the crankcase 3 as it is detached from the cylinder block 2 and viewed from the cylinder block 2 side.

The balancer shaft 14, which is cylindrical, is located between the mating face 2a of the cylinder block 2 and the upper mating face 3a of the crankcase 3 and immediately in front of the crankshaft 8. Specifically, the left and the right end of the balancer shaft 14 are journaled by a roller bearing 17 and a ball bearing 18, respectively, fitting in position in bearing holes formed between the mating faces 2a, 3a.

The left balancer weight 15 is formed integrally with, or secured by press fitting to, the left end of the balancer shaft 14, and disposed immediately on the axially outer side relative to the roller bearing 17.

The right balancer weight 16 is made up of an inner weight 16a disposed in abutment with the axially inner end face of the ball bearing 18, and an outer weight 16 disposed in abutment with the axially outer end face of the ball bearing 18.

The outer weight 16b is also used as a balancer drive gear 16b' in meshing engagement with a drive gear 19 mounted on the crankshaft 8 to transmit the rotation of the crankshaft 8 to the balancer shaft 14 at the same speed. Specifically, the balancer drive gear 16b' is formed with weight reduction holes 16c disposed on one side with respect to a line "A" passing through an axis "a" of the balancer drive gear 16b' (in FIG. 3, on the lower side with respect to the line "A," which is opposite the inner weight 16a). The weight reduction holes 16c allow the balancer drive gear 16b' to function as a balancer weight, with its weight unevenly distributed on the other side.

The balancer shaft 14 has a holding portion 14a formed at the right end thereof. The inner end of the holding portion 14a is formed integrally with a stopper boss 14b. The outside circumferential face of the holding portion 14a is machined to have spline teeth. On the holding portion 14a are mounted in the following order: the inner weight 16a, the ball bearing 18, the outer weight 16b, and an accessory drive gear 20. These parts are securely held on the holding portion 14a as sandwiched between the stopper boss 14b and a nut 21 screwed on the outer end of the holding portion 14a. The weights 16a, 16b and the accessory drive gear 20 are in spline engagement with the holding portion 14a to rotate together with the balancer shaft 14.

The left balancer weight 15 and the right balancer weight 16 are disposed on axially outer sides relative to the crank weights 8e, 8f located on the crankshaft 8 on axially outermost sides, respectively. Specifically, the left balancer weight 15 is located in a space between the left side wall of the crankcase 3 and a starter gear 22 mounted on the left end of the crankshaft 8 outside the crankcase, and the inner weight 16a is located in a space between the right side wall of the crankcase 3 and a reduction wheel 23 mounted on the right end of the crankshaft 8 inside the crankcase.

In this embodiment, the right balancer weight 16 at the right end of the balancer shaft 14 is made up of the dedicated inner weight 16a and the outer weight 16b also used as a gear, and the weights 16a, 16b hold the ball bearing 18 as sandwiched therebetween. Thus, the weight of the weights 16a, 16b acts on the ball bearing 18 in a well balanced manner, thereby reducing the bending moment which acts on bearing portions of the balancer shaft 14 and accordingly reducing the diameter of the balancer shaft 14. In addition, since the inner and outer weights are separately disposed on both sides of the bearing 18, the bearing 18 does not receive an uneven load and as a result can have an extended service life.

The inner weight 16a is a dedicated weight, and the outer weight 16b is also used as the gear 16b' for driving the balancer shaft. Thus, the number of parts is not increased even with the balancer weights separately disposed on both sides of the bearing 18.

The balancer weights 15, 16 are disposed on axially outer sides relative to the crank weights 8e, 8f located on the crankshaft 8 on axially outermost sides, so that there is no interference between the balancer weights 15, 16 and the crank weights 8e, 8f. Therefore, the balancer shaft 14 can be installed in close proximity to the crankshaft 8, and upsizing of the engine in the direction perpendicular to the crankshaft can be avoided, even with a balancer shaft installed.

The left and the right balancer weight 15, 16 are disposed on axially outer sides relative to the crank weights located on the crankshaft 8 on axially outermost sides, so that the balancer weights 15, 16 are greatly spaced apart from each other in the direction of the crankshaft. Thus, it is possible to reduce the weight necessary to allow them to function as couple balancers, and also from this point of view allow the engine to be downsized.

The description above discloses (amongst others) an embodiment of an engine including: a balancer shaft supported at its both ends through bearings by a crankcase and disposed in parallel with a crankshaft; and balancer weights provided at one and the other end of the balancer shaft, in which a balancer weight at at least one of the one and the other end is made up of a first and a second weight, and the first and the second weight are disposed across the bearing.

Accordingly, a balancer weight at at least one of the one and the other end is made up of a first and a second weight, and the first and the second weight are disposed across the bearing, so that the weight of the first and the second weight acts on the bearing in a well balanced manner. This can reduce the bending moment which acts on a bearing portion of the balancer shaft, allowing for reduction in the diameter of the balancer shaft, and also prevention of an uneven load from acting on the bearing to extend the service life of the bearing.

Preferably, the first weight is a dedicated weight and disposed on one axial side of the bearing, and the second weight is also used as a gear and disposed on the other axial side of the bearing.

Accordingly, the second weight is also used as a gear for driving the balancer shaft. Thus, the number of parts is not increased even with the weights separately disposed on both sides of the bearing.

Further, preferably the balancer weights are disposed on axially outer sides relative to crank weights located on the crankshaft on axially outermost sides.

Accordingly, the balancer weights are disposed on axially outer sides relative to crank weights located on the crankshaft on axially outermost sides, so that there is no interference between the balancer weights and the crank weights. Therefore, the balancer shaft can be installed in close proximity to the crankshaft, and upsizing of the engine in the direction perpendicular to the crankshaft can be avoided, even with a balancer shaft installed.

Thus, the description above provides as a preferred embodiment an engine in which a bending moment acting on bearing portions of a balancer shaft and an offset load acting on bearings can be reduced, and in which upsizing of the diameter of the balancer shaft can be avoided and the service life of the bearings can be extended, said engine including: a balancer shaft 14 supported at its both ends through bearings 17, 18 by a crankcase 3 and disposed in parallel with a crankshaft 8; and balancer weights 15, 16 provided at one and the other end of the balancer shaft 14. A balancer weight 15, 16 at at least one of the one and the other end is made up of a first and a second weigh 16a, 16b, and the first and the second weight 16a, 16b are disposed across the bearing 17, 18.

## Claims

1. Engine (1) comprising a balancer device (13) comprising a balancer shaft (14) rotatably supported in a crankcase (3), and balancer weights (15, 16) provided at opposing ends of the balancer shaft (14), wherein at least one of the balancer weights (16) is made up of first and second weights (16a, 16b), said first and second weights (16a, 16b) being disposed on opposite sides of a bearing (18) supporting the respective end of the balancer shaft (14), said first weight is an inner weight (16a) disposed on an axially inner side of the bearing (18), and said second weight is an outer weight (16b) disposed on an axially outer side of the bearing (18), **characterized in that**
said outer weight (16b) being configured as a balancer drive gear (16b'), being in meshing engagement with a drive gear (19) mounted on the crankshaft (8),
said balancer drive gear (16b') is formed with weight reduction holes (16c) which allow the balancer drive gear (16b') to function as a balancer weight.

2. Engine according to claim 1, **characterized in that** the balancer shaft (14) is disposed in parallel with a crankshaft (8).

3. Engine according to claim 1 or 2, **characterized in that** the inner weight (16a) is disposed in abutment with the axially inner end face of the bearing (18).

4. Engine according to one of the claims 1 to 3, **characterized in that** the outer weight (16b) is disposed in abutment with the axially outer end face of the bearing (18).

5. Engine according to one of the claims 1 to 5, **characterized in that** the balancer weights (15, 16) are disposed on axially outer sides relative to crank weights (8e, 8f) located on the crankshaft (8) on axially outermost sides.

## Patentansprüche

1. Brennkraftmaschine (1), aufweisend eine Ausgleichsvorrichtung (13), die eine Ausgleichswelle (14), drehbar gelagert in einem Kurbelgehäuse (3), aufweist und Ausgleichsgewichte (15, 16), vorgesehen an gegenüberliegenden Enden der Ausgleichswelle (14), wobei zumindest eines der Ausgleichsgewichte (15, 16) aus einem ersten und einem zweiten Gewicht (16a, 16b) gebildet ist, wobei das erste und das zweite Gewicht (16a, 16b) an gegenüberliegenden Seiten des Lagers (18), das das jeweilige Ende der Ausgleichswelle (14) lagert, angeordnet ist, wobei das erste Gewicht ein inneres Gewicht (16a), angeordnet auf einer axialen inneren Seite des Lagers (18), ist und das zweite Gewicht ein äußeres Gewicht, angeordnet auf einer axial äußeren Seite des Lagers (18), ist,
**dadurch gekennzeichnet, dass**
das äußere Gewicht (16b) als ein Ausgleichsantriebszahnrad (16b`) konfiguriert ist, das im Kämmeingriff mit einem Antriebszahnrad (19), montiert auf der Kurbelwelle (6), ist, wobei das Ausgleichsantriebszahnrad (16b') mit gewichtsreduzierenden Bohrungen (16c) gebildet ist, die einem Ausgleichsantriebszahnrad (16b`) gestatten, als ein Ausgleichsgewicht zu funktionieren.

2. Brennkraftmaschine nach Anspruch 1, **dadurch gekennzeichnet, dass** zumindest die Ausgleichswelle (14) parallel mit einer Kurbelwelle (8) angeordnet ist.

3. Brennkraftmaschine nach Anspruch 1 oder 2, **dadurch gekennzeichnet, dass** das innere Gewicht (16a) in Anlage mit der axial inneren Endfläche des Lagers (18) angeordnet ist.

4. Brennkraftmaschine nach einem der Ansprüche 1 bis 3, **dadurch gekennzeichnet, dass** das äußere Gewicht (16b) in Anlage mit der axial äußeren Endfläche des Lagers (18) angeordnet ist.

5. Brennkraftmaschine nach einem der Ansprüche 1 bis 5, **dadurch gekennzeichnet, dass** die Ausgleichsgewichte (15, 16) angeordnet sind auf axial äußeren Seiten in Bezug auf die Kurbelgewichte (8e, 8f), angeordnet auf der Kurbelwelle (8) auf axial am weitesten außen befindlichen Seiten.

## Revendications

1. Moteur (1) comprenant un dispositif d'équilibrage (13) comprenant un arbre d'équilibrage (14) soutenu en rotation dans un boîtier de vilebrequin (3), et des poids d'équilibrage (15, 16) disposés aux extrémités opposées de l'arbre d'équilibrage (14), dans lequel au moins l'un des poids d'équilibrage (16) est constitué d'un premier et d'un second poids (16a, 16b), lesdits premier et second poids (16a, 16b) étant disposés sur les côtés opposés d'un palier (18) soutenant l'extrémité respective de l'arbre d'équilibrage (14), ledit premier poids est un poids interne (16a) disposé sur un côté axialement interne du palier (18), et ledit second poids est un poids externe (16b) disposé sur un côté axialement externe du palier (18),
**caractérisé en ce que**
ledit poids externe (16b) est configuré comme un engrenage d'entraînement d'équilibrage (16b'), en prise avec un engrenage d'entraînement (19) monté sur le vilebrequin (8),
ledit engrenage d'entraînement d'équilibrage (16b') est muni de trous de réduction de poids (16c) permettant à l'engrenage d'entraînement d'équilibrage (16b') de jouer le rôle de poids d'équilibrage.

2. Moteur selon la revendication 1, **caractérisé en ce que** l'arbre d'équilibrage (14) est disposé en parallèle avec un vilebrequin (8).

3. Moteur selon la revendication 1 ou 2, **caractérisé en ce que** le poids interne (16a) est disposé en butée avec la face d'extrémité axialement interne du palier (18).

4. Moteur selon l'une des revendications 1 à 3, **caractérisé en ce que** le poids externe (16b) est disposé en butée avec la face d'extrémité axialement externe du palier (18).

5. Moteur selon l'une des revendications 1 à 5, **caractérisé en ce que** les poids d'équilibrage (15, 16) sont disposés sur les côtés axialement externes par rapport aux poids de vilebrequin (8e, 8f) situés sur le vilebrequin (8) sur les côtés axialement les plus externes.
